# FASCICULE DE BREVET EUROPEEN

(11) **EP 1 641 868 B1**
(45) Date de publication et mention de la délivrance du brevet: **29.10.2008**
(21) Numéro de dépôt: 04767524.4
(22) Date de dépôt: 30.06.2004
(51) Int. Cl.: C08K 3/00, B05D 1/14, C08L 77/00

(54) **CHARGES MINERALES DESTINEES A AMELIORER LA MATITE DES POLYMERES THERMOPLASTIQUES**
MINERALISCHE FÜLLSTOFFE ZUR VERBESSERUNG DER OPAZITÄT VON THEROMPLASTISCHEN POLYMEREN
MINERAL FILLERS FOR ENHANCING OPACITY OF THERMOPLASTIC POLYMERS

(30) Priorité: 03.07.2003 FR 0308117
(43) Date de publication de la demande: 05.04.2006
(73) Titulaire: Rhodia Performance Fibres, 62223 Saint Laurent Blangy (FR)
(72) Inventeur: DURAND, Roland, F-69007 LYON (FR); KOSCHER, Arnaud, B-1200 BRUXELLES (BE); REFINETTI, Sergio, CEP 01408-0001 SAO PAULO (SP) (BR)
(74) Mandataire: Esson, Jean-Pierre
(86) Numéro de dépôt international: PCT/FR2004/001680
(87) Numéro de publication internationale: WO 2005/012409

(56) Documents cités:
- WO-A-02/02696
- WO-A-03/091323
- DD-A- 273 843
- US-A- 6 071 612
- US-A1- 2003 035 944
- DATABASE CHEMABS [Online] CHEMICAL ABSTRACTS SERVICE, COLUMBUS, OHIO, US; 12 mai 1984 (1984-05-12), INOUE ET AL: "Silica Titanium complex white pigments" XP002266779 Database accession no. 84:61356 & JP 50 123097 A (MITSUBISHI) 27 septembre 1975 (1975-09-27)

## Description

La présente invention concerne l'utilisation d'une association de charges minérales destinées à améliorer la matité de compositions de polymères thermoplastiques. L'invention concerne également les compositions de polymères thermoplastiques comprenant cette association de charges minérales comme agent de matité, ainsi que les fils, fibres, filaments et articles obtenus à partir de ces compositions.

Les polymères thermoplastiques sont largement utilisés depuis de nombreuses années, notamment dans le domaine textile sous forme de fils, fibres et filaments, en tant qu'agents de substitution des produits naturels, en raison de la moindre disponibilité et/ou du coût plus élevés de ces derniers.

Cependant, la substitution de produits naturels par des polymères thermoplastiques entraîne des différences de qualité des produits finis, tant au niveau résistance mécanique, chimique, qu'au niveau du toucher, de l'aspect extérieur, etc.

Si de nombreux progrès sont déjà notoires pour ce qui concerne les aspects de résistances mécanique et chimique, il est souvent objecté par le consommateur final une brillance excessive des polymères thermoplastiques, notamment lorsqu'ils sont sous forme de fibres, par rapport à leurs homologues naturels.

C'est pourquoi, depuis de nombreuses années, on recherche à matifier le plus possible les polymères thermoplastiques, c'est-à-dire leur donner un aspect plus mat, ou encore moins brillant.

L'art antérieur fournit de nombreux procédés permettant d'améliorer la matité de polymères thermoplastiques et il est connu en particulier que l'incorporation de charges minérales comme le dioxyde de titane (TiO₂) ou le sulfate de zinc (ZnS) dans des fibres synthétiques, par exemple le polyamide ou le polyester, peut conduire à des indices de matité qui sont relativement satisfaisants, voire acceptables pour la plupart des utilisations.

En effet, parmi les additifs susceptibles de conférer une grande matité à une composition polymère thermoplastique, le dioxyde de titane semble être aujourd'hui celui offrant le meilleur indice de matité, à quantité égale d'additifs. Pour encore augmenter la matité de polymères thermoplastique et notamment des polyamides, il pourrait être envisagé d'augmenter le taux de TiO₂ dans la composition polymère.

On s'aperçoit cependant qu'une augmentation de la quantité de dioxyde de titane n'entraîne qu'une très faible augmentation de la matité, et surtout, qu'avec des taux relativement élevés en dioxyde de titane, les caractéristiques physiques des compositions polymères thermoplastiques ainsi que leur processabilité tendent à diminuer fortement.

Outre l'altération des propriétés mécaniques et une moins bonne processabilité, une augmentation de la quantité de charges dans des compositions polymères présente également l'inconvénient d'augmenter de manière sensible le coût du produit fini.

Il subsiste par conséquent un besoin pour des compositions polymères thermoplastiques présentant une matité supérieure à celle connue de l'art antérieur, et dont le pourcentage pondéral de charge de matité soit compatible avec les applications recherchées et avec la processabilité et les caractéristiques physiques.

La littérature fournit de nombreux exemples de polymères thermoplastiques comprenant diverses charges minérales, permettant de conférer auxdits polymères des propriétés d'ignifugation, de fluorescence, d'opacité, de blanchiment, de matité, de porosité, etc.

Ainsi, le brevet US 6 071 612 divulgue des fils, fibres ou filaments de polyester comprenant du sulfure de zinc (ZnS, dans des proportions comprises entre 0, 1 % et 3% en poids) ou encore une association TiO₂ + ZnS. Deux exemples montrent qu'une association TiO₂ + ZnS représentant un total de 2,17% et 2,4% en poids par rapport au poids total de polymère, permet d'augmenter la blancheur et le toucher de compositions polyester. Il est en effet connu que les compositions à base de polyester ont tendance à jaunir et l'on recherche précisément à augmenter la blancheur de ces compositions.

C'est ainsi qu'il est démontré que le sulfure de zinc augmente notamment la blancheur de compositions polyester, blancheur exprimée en termes de luminescence. Cette notion de blancheur est cependant sans rapport avec l'aspect mat qui est recherché dans la présente demande de brevet. L'homme du métier sait apprécier et différencier l'aspect plus ou moins mat de deux "blancs" similaires.

La demande de brevet WO-A1-99/67451 enseigne que l'ajout de sulfure de zinc, au lieu d'oxyde de titane, dans un polymère thermoplastique permet de réduire de manière significative l'abrasion des lames des couteaux utilisées pour couper les fibres destinées au flockage. La quantité de sulfure de zinc ajoutée dans le polymère est de 1,5% en poids dans les exemples. Cette quantité est présentée comme suffisant pour obtenir une matité similaire au même polymère chargé à 1,5% en TiO₂.

La demande de brevet JP-50123097 décrit l'utilisation, comme agent de matité d'un complexe dioxyde de titane / silice préparé par oxydation simultanée des chlorures correspondants. Il n'est pas question ici d'association de charges minérales, mais plutôt de former un nouveau type de charge minérale utilisable comme agent de matité.

Le brevet DD 273 843 divulgue quant à lui un procédé de matification de fibres polymères polyamide ou polyester dans lequel une partie du dioxyde de titane est remplacé par du sulfate de baryum, pour des raisons d'ordre purement économique. L'effet matifiant est mesuré à l'aide de l'indice de "blancheur de Taube" et est jugé comparable à celui du dioxyde de titane seul, pour des quantités totales en charges minérales de 1,0% et 1,3% en poids.

Ainsi, un premier objectif de la présente invention consiste à fournir des charges minérales permettant d'obtenir une matité améliorée de polymères thermoplastiques.

Un autre objectif de la présente invention consiste à fournir des charges minérales permettant d'obtenir une matité améliorée de polymères thermoplastiques, par rapport à la matité obtenue avec une quantité égale de TiO₂ seul.

D'autres objectifs encore apparaîtront dans la description détaillée de l'invention qui suit.

Les inventeurs ont découvert de manière surprenante que les objectifs exposés ci-dessus peuvent être atteints en totalité ou en partie en utilisant, comme additif dans des compositions polymères thermoplastiques, une association de charges minérales afin d'améliorer le degré de matité desdites compositions polymères.

Plus précisément, l'invention concerne tout d'abord l'utilisation d'une association de charges minérales comme additif dans des compositions polymères thermoplastiques, pour améliorer la matité desdites compositions, caractérisé en ce que l'association comprend au moins deux charges minérales choisies parmi le sulfure de zinc (ZnS), le dioxyde de titane (TiO₂), le sulfate de baryum (BaSO₄), la silice (SiO₂), l'oxyde d'alumine, le kaolin, le carbonate de calcium, le sulfate de calcium et les argiles matifiantes.

Dans la présente description, le terme "matité" doit être compris comme le terme contraire ou s'opposant à "brillance". Par "argiles matifiantes", on entend les argiles connues de l'homme du métier et utilisées comme agent de matité dans les compositions polymères thermoplastiques.

Les inventeurs ont en effet découvert que l'utilisation d'une association d'au moins deux charges minérales parmi celles listées ci-dessus, en tant qu'additif dans une composition polymère thermoplastique, permet d'obtenir une matité comparable voire supérieure à la matité qui aurait été obtenue par addition d'une quantité égale dans la même composition polymère thermoplastique, d'un seul agent de matité, en particulier de dioxyde de titane seul.

Les charges minérales utilisées en association comme agent de matité se présentent généralement sous forme de particules de faible taille, de préférence micrométrique, ou inférieure au micromètre. La taille des particules doit en effet rester compatible avec les contraintes de mises en oeuvre des compositions polymères thermoplastiques et notamment pour la préparation de fils, fibres, filaments.

En outre, ces particules peuvent avantageusement être revêtues ou enrobées, par exemple afin de les protéger contre diverses attaques chimiques ou physiques, ou encore afin de les rendre inertes vis-à-vis des divers composants dans lesquels elles sont incorporées. L'agent de revêtement ou d'enrobage sera choisi parmi les agents connus de l'homme du métier, et devra en outre ne pas interférer avec les propriétés intrinsèques de matité des diverses charges minérales utilisées.

Il peut également être avantageux d'utiliser des charges minérales sous forme de particules revêtues ou enrobées sur un support qui sera de préférence minéral, comme par exemple la silice, l'alumine, etc.

Selon un mode de réalisation préféré, la présente invention concerne l'utilisation d'une association de charges minérales comme additif dans des compositions polymères thermoplastiques, pour améliorer la matité desdites compositions, caractérisé en ce que l'association comprend au moins deux charges minérales choisies parmi le sulfure de zinc (ZnS), le dioxyde de titane (TiO₂), le sulfate de baryum (BaSO₄), et la silice (SiO₂).

On préfère pour l'utilisation décrite ci-dessous les associations comprenant deux charges minérales, ou trois charges minérales, voire quatre charges minérales, et en particulier les associations comprenant deux charges minérales (associations binaires) choisies parmi celles comprenant du sulfure de zinc et du dioxyde de titane, du sulfure de zinc et du sulfate de baryum, du sulfure de zinc et de la silice, et celles comprenant du dioxyde de titane et de la silice.

Les associations tout particulièrement préférées pour l'utilisation selon la présente invention sont celles qui comprennent du sulfure de zinc et du dioxyde de titane, et celles qui comprennent du dioxyde de titane et de la silice.

Selon la présente invention, l'association de charges minérales décrite ci-dessus est utilisée comme agent de matité, et à cet égard est mise en oeuvre en tant qu'additif dans des compositions polymères, en particulier dans des compositions polymères thermoplastiques, par exemple telles que celles utilisées dans le domaine textile pour l'élaboration de fils, fibres, filaments et articles textiles, mais aussi dans de nombreux autres domaines où l'on recherche la matité de compositions polymères mises en oeuvre par laminage, pultrusion, extrusion, extrusion-soufflage, etc.

L' association de charges minérales utilisée comme agent de matité peut avantageusement être utilisé comme additif par exemple dans des formulations d'ensimage de fils, fibres et filaments, etc.

Selon un mode de réalisation particulier l'invention, la proportion en poids de l'association de charges minérales par rapport au poids total de la composition polymère est supérieure à 1,5%, de préférence supérieure ou égale à 2%, de préférence encore supérieure ou égale à 2,5% en poids.

Pour des raisons de propriétés chimiques, physiques et mécaniques, la proportion en poids de charges minérales, utilisées comme agent de matité, par rapport au poids total de la composition polymère est inférieure à 10%, de préférence inférieure à 7%, avantageusement inférieure à 4% en poids.

Selon la présente invention il est ainsi possible d'utiliser une association de charges minérales comme décrite plus haut, chacune des charges constituant ladite association étant présentes en toutes proportions. À titre d'exemples, et de manière non limitative, les charges minérales des associations binaires seront mises en oeuvre dans l'utilisation de l'invention dans des proportions en poids variant de 1:99 à 99:1, de préférence de 20:80 à 80:20, notamment de 40:60 à 60:40, plus spécifiquement dans des proportions en poids de l'ordre de 50:50.

Selon un mode de réalisation préféré de l'invention, celle-ci concerne l'utilisation d'une association de charges minérales, comme agent de matité de compositions polymères thermoplastiques, caractérisée en ce que l'association comprend du dioxyde de titane et du sulfure de zinc, en toutes proportions.

Il a en outre été découvert de manière surprenante que l'utilisation de l'association de charges minérales tel que défini précédemment engendre, dans les compositions polymères thermoplastiques dans lesquels elle est ajoutée, un degré de matité comparable ou supérieur à celui obtenu en utilisant une seule charge minérale choisie parmi le dioxyde de titane, le sulfure de zinc, le sulfate de baryum ou la silice.

En particulier, il a pu être observé un effet synergique tout à fait intéressant entre le dioxyde de titane et le sulfure de zinc, notamment lorsque ces charges sont utilisées dans un ratio égal ou voisin de 1. Le degré de matité observé avec une quantité de l'association 1:1 de TiO₂/ZnS est supérieur à celui observé avec une quantité égale de TiO₂ seul ou une quantité égale de ZnS seul.

D'autres effets synergiques comparables ont également pu être observés avec d'autres associations de charges minérales, comme par exemple, les associations ZnS / BaSO₄, ZnS / BaSO₄ / TiO₂, ZnS / SiO₂, ZnS / SiO₂ / TiO₂, et TiO₂/SiO₂. Certaines de ces compositions polymères thermoplastiques ainsi additivées possèdent un degré de matité qui n'avait encore jamais été observé jusqu'alors avec les techniques divulguées dans l'art antérieur, à taux de charge égal.

Les compositions polymères thermoplastiques pouvant être utilisées dans le cadre de la présente invention comprennent une matrice polymère thermoplastique composée d'un ou plusieurs polymères thermoplastiques. Il doit cependant être compris que toute matrice polymère connue de l'homme du métier peut être mise en oeuvre dans le cadre de la présente invention.

À titre d'exemples de polymères thermoplastiques pouvant convenir comme matrice polymère dans le cadre de la présente invention, on peut citer : les polylactones telles que la poly(pivalolactone), la poly(caprolactone) et les polymères de la même famille ; les polyuréthanes obtenus par réaction entre des diisocyanates comme le 1,5-naphtalène diisocyanate; le p-phénylène diisocyanate, le m-phénylène diisocyanate, le 2,4-toluène diisocyanate, le 4,4'-diphénylméthane diisocyanate, le 3,3'-diméthyl-4,4'-diphénylméthane diisocyanate, le 3,3-diméthyl-4,4'-biphényl diisocyanate, le 4,4'-diphénylisopropylidène diisocyanate, le 3,3'-diméthyl-4,4'-diphényl diisocyanate, le 3,3'-diméthyl-4,4'-diphénylméthane diisocyanate, le 3,3'-diméthoxy-4,4'-biphényl diisocyanate, le dianisidine diisocyanate, le toluidine diisocyanate, l'hexaméthylène diisocyanate, le 4,4'-diisocyanatodiphénylméthane et composés de la même famille et les diols à longues chaînes linéaires comme le poly(tétraméthylène adipate), le poly(éthylène adipate), le poly(1,4 -butylène adipate), le poly(éthylène succinate), le poly(2,3-butylène succinate), les polyéther diols et composés de la même famille; les polycarbonates comme le poly[méthane-bis(4-phényl)carbonate], le poly[1,1-éther bis(4-phényl)carbonate], le poly[diphénylméthane-bis(4-phényl)carbonate], le poly[1,1-cyclohexane-bis(4-phényl)carbonate] et polymères de la même famille; les polysulfones; les polyéthers; les polycétones; les polyamides comme le poly(acide 4-aminobutyrique), le poly(héxaméthylène adipamide), le poly(acide 6-aminohexanoïque), le poly(m-xylylène adipamide), le poly(p-xylylène sébacamide), le poly(2,2,2-triméthylhexaméthylène téréphtalamide), le poly(métaphénylène isophtalamide), le poly(p-phénylène téréphtalamide), et polymères de la même famille ; les polyesters comme le poly(éthylène azélate), le poly(éthylène-1,5-naphtalate), le poly(1,4-cyclohexane diméthylène téréphtalate), le poly(éthylène oxybenzoate), le poly(para-hydroxybenzoate), le poly(1,4-cyclohéxylidènediméthylène téréphtalate), le poly(1,4-cyclohexylidène diméthylène téréphtalate), le polyéthylène téréphtalate, le polybutylène téréphtalate et les polymères de la même famille ; les poly(oxydes d'arylène) comme le poly(oxyde de 2,6-diméthyl-1,4-phénylène), le poly(oxyde de 2,6-diphényl-1,4-phénylène) et les polymères de la même famille ; les poly(sulfures d'arylène) comme le poly(sulfure de phénylène) et les polymères de la même famille ; les polyétherimides ; les polymères vinyliques et leurs copolymères comme le poly(acétate de vinyle), le poly(alcool vinylique), le poly(chlorure de vinyle), le poly(vinylbutyral), le poly(chlorure de vinylidène) ; les copolymères éthylène-acétate de vinyle, et les polymères de la même famille ; les polymères acryliques, les polyacrylates et leurs copolymères comme le poly(acrylate d'éthyle), le poly(acrylate de n-butyle), le poly(méthacrylate de méthyle), le poly(méthacrylate d'éthyle), le poly(méthacrylate de n-butyle), le poly(méthacrylate de n-propyle), le poly(acrylamide), le poly(acrylonitrile), le poly(acide acrylique) ; les copolymères éthylène-acide acrylique, les copolymères éthylène-alcool vinylique, les copolymères de l'acrylonitrile, les copolymères méthacrylate de méthyle - styrène, les copolymères éthylène-acrylate d'éthyle, les copolymères méthacrylate-butadiène-styrène, l'ABS, et les polymères de la même famille ; les polyoléfines comme le poly(éthylène) basse densité, le poly(propylène), le poly(éthylène) chloré basse densité, le poly(4-méthyl-1-pentène), le poly(éthylène), le poly(styrène), et les polymères de la même famille ; les ionomères ; les poly(épichlorohydrines) ; les poly(uréthanne)s tels que produits de polymérisation de diols comme la glycérine, le triméthylol-propane, le 1,2,6-hexanetriol, le sorbitol, le pentaérythritol, les polyéther-polyols, les polyester-polyols et composés de la même famille avec des polyisocyanates comme le 2,4-tolylène diisocyanate, le 2,6-tolylène diisocyanate, le 4,4'-diphénylméthane diisocyanate, le 1,6-héxaméthylène diisocyanate, le 4,4'-dicycohexylméthane diisocyanate et les composés de la même famille ; et les polysulfones telles que les produits de réaction entre un sel de sodium du 2,2-bis(4-hydroxyphényl)propane et de la 4,4'-dichlorodiphénylsulfone ; les résines furane comme le poly(furane); les plastiques cellulose-ester comme l'acétate de cellulose, l'acétate-butyrate de cellulose, propionate de cellulose et les polymères de la même famille ; les silicones comme le poly(diméthylsiloxane), le poly(diméthylsiloxane co-phénylméthylsiloxane), et les polymères de la même famille ; et les mélanges d'au moins deux des polymères précédents.

Selon une variante particulière de l'invention, la matrice thermoplastique est un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR 2 743 077, FR 2 779 730, US 5 959 069, EP 0 632 703, EP 0 682 057 et EP 0 832 149.

Selon une autre variante particulière de l'invention, la matrice thermoplastique de l'invention est un polymère de type arbre statistique, de préférence un copolyamide présentant une structure arbre statistique. Ces copolyamides de structure arbre statistique ainsi que leur procédé d'obtention sont notamment décrits dans le document WO 99/03909.

La matrice thermoplastique telle que définie dans le cadre de la présente invention peut également être une composition comprenant un polymère thermoplastique linéaire et un polymère thermoplastique étoile, H et/ou arbre tels que décrits ci-dessus.

Au sens de la présente invention, les compositions polymères thermoplastiques peuvent également comprendre un copolyamide hyperbranché du type de ceux décrits dans le document WO 00/68298. Bien entendu, les compositions citées dans cette description peuvent également comprendre toute combinaison de polymère thermoplastique étoile, H, arbre, copolyamide hyperbranché décrit ci-dessus.

Comme autre type de matrice polymère pouvant être mise en oeuvre dans le cadre de l'invention, on peut citer les polymères thermostables : ces polymères sont de préférence infusibles ou présentent un point de ramollissement supérieur à 180°C, de préférence supérieur ou égal à 200°C, voire supérieur.

Ces polymères thermostables peuvent par exemple être choisis parmi les polyamides aromatiques, les polyamides imide tels que les polytrimellamide-imide, ou les polyimides tels que les polyimides obtenus selon le document EP 0119185, connus dans le commerce sous la marque P84. Les polyamides aromatiques peuvent être tels que décrits dans le brevet EP 0360707. Ils peuvent être obtenus selon le procédé décrit dans le brevet EP 0360707.

Parmi les matrices polymères, on préfère tout particulièrement les matrices à base de polyamide et en particulier de polyamides semi-cristallins, tels que le polyamide 6, le polyamide 6.6, le polyamide 11, le polyamide 12, le polyamide 4, les polyamides 4-6, 6-10, 6-12, 6-36, 12-12, les polyamides semi-aromatiques obtenus à partir d'acide téréphtalique et/ou isophtalique tels que le polyamide commercialisé sous le nom commercial AMODEL; les polyesters tels que le PET, le PBT, le PTT; les polyoléfines tels que le polypropylène, le polyéthylène; les polyamides aromatiques, les polyamide imide ou les polyimides; les latex tels que les latex acryliques et uréthanne; le PVC, la viscose, la cellulose, l'acétate de cellulose; leurs copolymères et alliages.

Les compositions polymères thermoplastiques peuvent en outre contenir tous les autres additifs pouvant être utilisés, par exemple des charges de renfort, des ignifugeants, des stabilisants aux UV, à la chaleur, ainsi que d'autres agents de matité, comme par exemple tels que ceux définis dans la présente invention, ainsi que d'autres agents connus de l'homme du métier.

Un autre objet de la présente invention concerne le procédé de préparation des compositions polymères thermoplastiques comprenant une association de charges minérales telles que définie précédemment comme agent de matité. Les diverses charges peuvent être ajoutées dans la composition polymère selon tous moyens connus de l'homme du métier. Parmi ceux-ci, on préfère cependant l'addition des charges par alimentation dans la veine fondue de la matrice ou de la composition polymère, ou bien encore au moyen d'un mélange maître ("master-batch" en langue anglaise).

Selon un autre aspect, il peut également être envisagé, voire approprié, de combiner ces deux derniers modes d'alimentation, alimentation en veine fondue et mélange-maître.

Selon une variante du procédé d'addition des charges minérales selon l'invention, celles-ci peuvent être ajoutées de manière séparée, selon un ou plusieurs des modes d'alimentation exposés ci-dessus. Ainsi, par exemple, une charge pourra être alimentée en veine fondue, tandis que l'autre sera alimentée par l'intermédiaire d'un mélange-maître.

Le mélange-maître sera préparé de telle sorte qu'il contienne une quantité de charges minérales de matité comprise entre 10% et 60% en poids, de préférence entre 20% et 50% en poids, avantageusement entre 30% et 40% en poids.

Les compositions polymères thermoplastiques comprenant une proportion en poids par rapport au poids total de la composition polymère supérieure ou égale à 2% et inférieure à 4% d'une association de charge minérales, l'association comprenant au moins deux charges minérales choisies parmi le sulfure de zinc, le dioxyde de titane et la silice, à l'exception des compositions polymères à matrice polyester comprenant une association binaire de dioxyde de titane et de sulfure de zinc forment un autre objet de l'invention.

Sont exclues toutefois de la présente invention les compositions dont la matrice comprend un polyester à laquelle est ajouté une association binaire de charges minérales composé de TiO₂ et de ZnS. De telles compositions sont divulguées dans le brevet US 6 071 612 discuté plus haut dans la présente description.

Parmi les compositions ci-dessus, on préfère celles comprenant les associations spécifiques de charges minérales choisis parmi ZnS / TiO₂, ZnS / SiO₂, ZnS / SiO₂ / TiO₂, et TiO₂ / SiO₂, à l'exception des compositions polymères à matrice polyester comprenant une association binaire de dioxyde de titane et de sulfure de zinc.

On préfère encore les compositions polymères thermoplastiques à matrice polyamide comprenant, en tant qu'agent de matité une association de charges minérales choisies parmi ZnS / TiO₂, ZnS / SiO₂, ZnS / SiO₂ / TiO₂, et TiO₂ / SiO₂, les associations à base de sulfure de zinc étant tout particulièrement préférées, notamment les associations binaires à base de sulfure de zinc, et notamment l'association ZnS / TiO₂.

Il a ainsi été découvert que les compositions polymères thermoplastiques comprenant une association de charges minérales telle que définie précédemment, présentent un degré de matité tout à fait intéressant.

En outre, du fait de l'effet synergique surprenant observé notamment avec des associations de charges minérales choisies parmi le dioxyde de titane, le sulfure de zinc, le sulfate de baryum et la silice, le degré de matité observé est comparable ou supérieur aux degrés de matité observés pour des compositions polymères thermoplastiques similaires comprenant une quantité égale d'agent de matité, cet agent de matité ne comprenant qu'une seule des charges minérales listées ci-dessus.

La présente invention concerne également les articles et notamment les fils, fibres et filaments obtenus à partir des compositions décrites ci-dessus, dans lesquelles l'association des charges minérales selon l'invention a été utilisée. En effet, ces compositions peuvent être mises en forme d'articles moulés, par exemple par injection ou par extrusion. Elles peuvent également être mises en forme de fils, fibres et filaments par filage.

Dans le cas des fils, fibres et filaments, ceux-ci peuvent être obtenus par exemple par filage en fondu, ou par filage par voie humide, des compositions additivées par l'association de charges selon l'invention. Les compositions sont alors de préférence préparées par introduction des charges minérales dans le polymère fondu dans un dispositif de mélange, par exemple en amont d'un dispositif de filage. Elles peuvent également être réalisées par introduction des charges minérales dans une solution de polymère, par exemple en amont d'un dispositif de filage par voie humide.

Par filage des compositions de l'invention, on peut obtenir par exemple des fils multifilamentaires continus, des fibres courtes ou longues, des monofilaments, des filés de fibres, des nappes, des rubans, des câbles etc. Il peut s'agir également de fils continus gonflants (BCF : "Bulk Continuous Filament"), utilisés notamment pour la fabrication de revêtements textiles, tels que les moquettes et tapis.

Tous les traitements classiques dans le domaine textile peuvent être appliqués aux fils, fibres et filaments obtenus à partir des compositions polymères thermoplastiques présentées dans le cadre de l'invention, tels que l'étirage, la texturation, la teinture etc. Dans le domaine des fils, fibres, filaments textiles, la faible taille des particules des charges minérales utilisées comme agents de matité -de l'ordre du micromètre, voire inférieure au micromètre, par exemple de l'ordre de 0,3 µm- est un avantage dans les procédés de filage notamment.

L'invention concerne également des articles obtenus à partir des fils, fibres, filaments décrits ci-dessus. De tels articles peuvent être obtenus notamment à partir d'un seul type de fils, fibres, filaments ou au contraire à partir d'un mélange de fils, fibres, filaments de types différents.

L'article comprend au moins en partie des fils, fibres, filaments obtenus à partir des compositions polymères thermoplastiques présentées dans le cadre de l'invention. L'article peut également comprendre d'autres types de fils, fibres ou filaments -par exemple des fils, fibres, filaments ne contenant pas d'association de charges minérales selon l'invention-. Pour un type donné de fils, fibres ou filaments, des fils, fibres ou filaments de natures différentes peuvent être utilisés dans l'article de l'invention.

Comme articles, on peut citer par exemple des articles tissés, non tissés, tricotés. La présente invention concerne également les articles composites, c'est-à-dire les articles à plusieurs composants. Ces composants peuvent être par exemple des fibres courtes, des supports, des articles, par exemple des articles textiles obtenus à partir de fils, fibres, filaments tels que des articles non tissés etc.

Comme articles textiles composites, on peut citer par exemple les surfaces floquées dont les principaux composants sont généralement des fibres courtes, un adhésif ou une colle, et un support. On peut citer également les surfaces touffetées utilisées notamment dans les moquettes, les revêtements d'ameublement ou muraux etc., dont les principaux composants sont généralement des fils, fibres, filaments ou des articles obtenus à partir de fils, fibres, filaments, un support, et éventuellement un adhésif ou colle.

Dans une surface floquée par exemple, l'agent de matité -i.e. l'association de charges minérales selon la présente invention- est présent dans les fibres de la surface floquée et peut également être présent dans la colle ou adhésif utilisé pour le flocage et/ou dans le support de la surface floquée.

Les compositions, articles, articles textiles, fils, fibres et filaments, éventuellement composites, peuvent être mis en oeuvre dans la fabrication de tout produit pour lequel on recherche une grande matité, en particulier une matité supérieure à celle observée jusqu'à présent par utilisation de dioxyde de titane, voire une matité encore plus importante non divulguée à la date de la présente invention.

Les compositions polymères thermoplastiques selon la présente invention trouvent une utilisation tout particulièrement intéressante dans la préparation de surfaces floquées possédant une très grande matité.

Outre la grande matité observée, l'utilisation d'associations de charges minérales selon l'invention présente de nombreux autres avantages, et notamment des avantages économiques qui peuvent être non négligeables, en particulier lorsque du dioxyde titane utilisé d'ordinaire comme agent de matité peut être remplacé en totalité ou en partie par une ou plusieurs autres charges minérales moins onéreuses.

L'homme du métier dispose ainsi, grâce la présente invention, de moyens plus économiques permettant d'obtenir une matité de compositions polymère thermoplastiques encore plus importante.

De plus, il est bien connu que le dioxyde de titane utilisé seul dans des compositions polymères thermoplastiques destinées à la réalisation de surfaces floquées entraîne une usure importante des couteaux venant sectionner les fibres.

Grâce à la présente invention, il est désormais possible, en utilisant une association de charges minérales tel que défini précédemment, de réduire considérablement l'usure des couteaux et ainsi la fréquence de remplacement desdits couteaux, et ce, tout en obtenant une matité au moins égale voire supérieure à celle obtenue par incorporation dans la composition polymère thermoplastique d'une quantité égale d'une seule charge minérale matifiante.

D'autres détails et avantages de l'invention apparaîtront plus clairement à la vue des exemples ci-dessous donnés uniquement à titre indicatif.

### EXEMPLES

### Préparation des échantillons de fils de polyamide 6.6 additionné d' associations de charges minérales.

### a) Préparation des échantillons

On prépare des séries d'échantillons à base de polyamide contenant des associations ZnS / TiO₂ d'une part et SiO₂ / TiO₂ d'autre part.

Le polyamide 66 (PA66) mis en oeuvre est un Polyamide 66 ne comprenant pas de dioxyde de titane, de viscosité relative (mesurée à une concentration de 10 g/L dans de l'acide sulfurique à 96%) de 2,6.

Le ZnS utilisé (commercialisé par Sachtleben) a une granulométrie centrée autour de 0,35 µm.

Le TiO₂ utilisé est commercialisé sous le nom de 1074^{®} par la société Kronos.

La silice (SiO₂) utilisée est commercialisée sous le nom de Aerosil R812^{®} par la société Degusa.

L'incorporation de l'agent de matité (association des charges minérales comme indiqué ci-dessus) dans le PA66 se fait :
- soit par mélange de l'agent de matité sous forme de poudre avec le polymère broyé ;
- soit par l'intermédiaire d'un mélange maître (MM) à base polyamide comportant 30% en poids d'agent de matité, puis mélange du PA66 avec le mélange maître, le PA66 et le MM étant chacun sous forme de granulés.

Dans chacun des cas, l'association est introduite dans un dispositif d'extrusion qui assure le mélange en phase fondue. Le taux d'incorporation de la totalité des charges minérales est fixé à 1,5%, 2% et 3% dans le cas de l'association SiO₂ / TiO₂ et à 2%, 2,5% et 3% dans le cas de l'association ZnS / TiO₂.

### b) Préparation pour filage

Le mélange fondu est ensuite filé avec une température en tête de filière de 285°C environ, refroidi à l'air (20°C, humidité relative 65%), appelé avec une vitesse de bobinage de 800 m/min de manière à obtenir un fil continu multifilamentaire. Ce fil continu multifilamentaire est étiré pour obtenir un allongement à la rupture de l'ordre de 80%. Le multifilament ou fil ainsi obtenu est constitué de 20 brins et le diamètre du brin est d'environ 20 µm.

La filière utilisée est une filière à 20 trous, de section ronde.

Le titre au brin sur produit fini est de 2,3 dtex.

### Description du test d'évaluation visuelle de la matité des surfaces floquées.

### a) Préparation d'une surface floquée

On prépare des surfaces floquées à l'aide de chacun des échantillons obtenus précédemment (3 avec ZnS / TiO₂ et 3 avec SiO₂ / TiO₂).

Les fils continus sont coupés sous forme de fibres de 1 mm de longueur. Les fibres sont soumises à un traitement d'activation à base de tannin / sulfate d'aluminium.

Les fibres sont ensuite floquées sur un tissu noir polyester/coton (substrat format A4) enduit de l'adhésif Tubvinyl 235SL^{®} + 4% en poids Tubassist Fix 102W^{®} (commercialisés par la société CHT) sur une épaisseur de 15/100^{ème} mm.

La surface floquée ainsi obtenue est ensuite teinte en plein bain avec 3% en poids par rapport au poids des fibres de Noir Irgalan^{®} RBLN (commercialisé par la société CIBA).

### b) Évaluation de la matité

La matité est évaluée visuellement par un panel d'un groupe déterminé de 7 personnes au minimum (contrôleurs).

Chaque test est effectué par évaluation comparative des surfaces floquées (3 au maximum), posées sur un rouleau de tissu noir, en extérieur et par temps ensoleillé.

Les surfaces présentées devant les contrôleurs sont dénuées de toute marque distinctive susceptible d'influencer l'évaluation.

Les résultats obtenus sont présentés dans le Tableau (I) suivant :

### -- Tableau (I) --

### Évaluation de la matité

**Tableau (Ia) : Association TiO₂/SiO₂**

| | | ***Charges totales* (%)** | | |
|---|---|---|---|---|
| | | ***1,5*** | **2** | **3** |
| ***TiO₂*/*SiO₂*** | ***0:100*** | 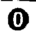 | 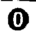 | 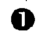 |
| | ***50:50*** | 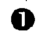 | 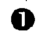 | 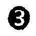 |
| | ***100:0*** | 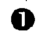 | 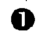 | 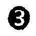 |

**Tableau (Ib) : Association ZnS/TiO₂**

| | | ***Charges totales* (%)** | | |
|---|---|---|---|---|
| | | **2** | **2, 5** | **3** |
| ***ZnS*/*TiO₂*** | ***0:100*** | 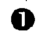 | 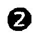 | 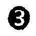 |
| | ***25:75*** | 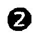 | 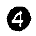 | 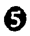 |
| | ***50:50*** | 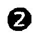 | 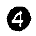 | 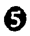 |
| | ***75:25*** | 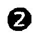 | 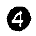 | 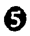 |
| | ***100:0*** | 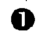 | 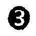 | 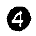 |

La matité est évaluée sur une échelle de 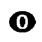 à 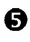 , indiquant un degré de matité allant de faible à très élevé, respectivement.

La lecture de ces résultats indique qu'à faible taux de charges totales (1,5%), l'association silice/dioxyde de titane produit déjà une matité comparable à celle obtenue avec le dioxyde de titane seul.
Cet effet est confirmé lorsque le taux de charges totale augmente.
En outre on peut également observer une synergie entre les deux charges minérales dioxyde de titane et sulfure de zinc, par exemple, puisque dès 2% de charges totales, la matité obtenue avec cette association est supérieure dans tous les cas à la matité obtenue - à quantité égale de charges - avec le sulfure de zinc seul, mais aussi avec le dioxyde de titane seul.
La présente invention montre ainsi clairement qu'il est possible d'obtenir, grâce à des associations d'agents de matité, des degrés de matités encore jamais atteints avec une quantité égale d'un seul agent de matité.

## Revendications

1. Utilisation d'une association de charges minérales comme additif dans des compositions polymères thermoplastiques afin d'en améliorer le degré de matité, par rapport à une même composition polymère thermoplastique comprenant comme seule charge minérale du dioxyde de titane en quantité égale, l'association comprenant au moins deux charges minérales choisies parmi le sulfure de zinc, le dioxyde de titane, le sulfate de baryum, la silice, l'oxyde d'alumine, le kaolin, le carbonate de calcium, le sulfate de calcium et les argiles matifiantes.

2. Utilisation selon la revendication 1, **caractérisé en ce que** l'association comprend au moins deux charges minérales choisies parmi le sulfure de zinc, le dioxyde de titane, le sulfate de baryum, et la silice.

3. Utilisation selon l'une quelconque des revendications précédentes, **caractérisée en ce que** l'association comprend deux charges minérales.

4. Utilisation selon l'une quelconque des revendications précédentes, **caractérisée en ce que** l'association de charges minérales est choisie parmi les associations comprenant du sulfure de zinc et du dioxyde de titane, du sulfure de zinc et du sulfate de baryum, du sulfure de zinc et de la silice, et ceux comprenant du dioxyde de titane et de la silice.

5. Utilisation selon l'une quelconque des revendications précédentes dans laquelle l'association de charges minérales comprend du dioxyde de titane et du sulfure de zinc.

6. Utilisation selon l'une quelconque des revendications précédentes, dans laquelle la proportion en poids de l'association de charges minérales par rapport au poids total de la composition polymère est supérieure à 1,5%, de préférence supérieure ou égale à 2%, de préférence encore supérieure ou égale à 2,5% en poids.

7. Utilisation selon l'une quelconque des revendications précédentes, dans laquelle la proportion en poids de l'association de charges minérales par rapport au poids total de la composition polymère est inférieure à 10%, de préférence inférieure à 7%, avantageusement inférieure à 4% en poids.

8. Utilisation selon l'une quelconque des revendications précédentes dans laquelle les charges minérales sont présentes dans des associations binaires dans des proportions en poids variant de 1:99 à 99:1, de préférence de 20:80 à 80:20, notamment de 40:60 à 60:40, plus spécifiquement dans des proportions en poids de l'ordre de 50:50.

9. Utilisation selon l'une quelconque des revendications précédentes, dans laquelle le polymère thermoplastique composant la matrice thermoplastique de la composition polymère est choisi parmi les polylactones, les polyuréthanes, les polycarbonates, les polysulfones, les polyéthers, les polycétones, les polyamides, les polyesters, les poly(oxydes d'arylène), les poly(sulfures d'arylène), les polyétherimides, les polymères vinyliques et leurs copolymères, les copolymères éthylène-acétate de vinyle, les polymères et copolymères acryliques, les polyacrylates et leurs copolymères, les polyoléfines, les ionomères, les poly(épichlorohydrines), poly(uréthanne)s, les polysulfones, les résines furane, les plastiques cellulose-ester, les silicones et les mélanges d'au moins deux des polymères précédents.

10. Utilisation selon l'une quelconque des revendications précédentes, dans laquelle le polymère thermoplastique composant la matrice thermoplastique de la composition polymère est à base de polyamide.

11. Utilisation selon l'une quelconque des revendications précédentes, dans laquelle le polymère thermoplastique composant la matrice thermoplastique de la composition polymère est un polyamide choisi parmi le polyamide 6, le polyamide 6.6, le polyamide 11, le polyamide 12, le polyamide 4, les polyamides 4-6, 6-10, 6-12, 6-36, 12-12, et les polyamides semi-aromatiques obtenus à partir d'acide téréphtalique et/ou isophtalique.

12. Composition polymère thermoplastique comprenant une proportion en poids par rapport au poids total de la composition polymère supérieure ou égale à 2% et inférieure à 4% d'une association de charge minérales, l'association comprenant au moins deux charges minérales choisies parmi le sulfure de zinc, le dioxyde de titane et la silice, à l'exception des compositions polymères à matrice polyester comprenant une association binaire de dioxyde de titane et de sulfure de zinc.

13. Composition selon la revendication 12, **caractérisée en ce qu'**elle comprend une association de charges minérales choisi parmi ZnS / TiO₂, ZnS/SiO₂, ZnS / SiO₂/TiO₂, et TiO₂/SiO₂, à l'exception des compositions polymères à matrice polyester comprenant une association binaire de dioxyde de titane et de sulfure de zinc.

14. Article obtenu à partir d'une ou plusieurs compositions selon la revendication 12 ou la revendication 13.

15. Article selon la revendication 14 sous forme de fibres fils, fibres ou filaments.

16. Surface floquée de grande matité comprenant un ou plusieurs articles tels que définis dans l'une quelconque des revendications 14 ou 15.

## Claims

1. Use of a combination of inorganic fillers as additive in thermoplastic polymer compositions in order to improve the degree of mattness thereof, with respect to the same thermoplastic polymer composition comprising titanium dioxide in an equal amount as single inorganic filler, the combination comprising at least two inorganic fillers chosen from zinc sulphide, titanium dioxide, barium sulphate, silica, alumina, kaolin, calcium carbonate, calcium sulphate and mattifying clays.

2. Use according to Claim 1, **characterized in that** the combination comprises at least two inorganic fillers chosen from zinc sulphide, titanium dioxide, barium sulphate and silica.

3. Use according to either one of the preceding claims, **characterized in that** the combination comprises two inorganic fillers.

4. Use according to any one of the preceding claims, **characterized in that** the combination of inorganic fillers is chosen from the combinations comprising zinc sulphide and titanium dioxide, zinc sulphide and barium sulphate or zinc sulphide and silica and those comprising titanium dioxide and silica.

5. Use according to any one of the preceding claims, in which the combination of inorganic fillers comprises titanium dioxide and zinc sulphide.

6. Use according to any one of the preceding claims, in which the proportion by weight of the combination of inorganic fillers with respect to the total weight of the polymer composition is greater than 1.5%, preferably greater than or equal to 2%, more preferably greater than or equal to 2.5%, by weight.

7. Use according to any one of the preceding claims, in which'the proportion by weight of the combination of inorganic fillers with respect to the total weight of the polymer composition is less than 10%, preferably less than 7%, advantageously less than 4%, by weight.

8. Use according to any one of the preceding claims, in which the inorganic fillers are present in binary combinations in proportions by weight varying from 1:99 to 99:1, preferably from 20:80 to 80:20, in particular from 40:60 to 60:40, more specifically in proportions by weight of the order of 50:50.

9. Use according to any one of the preceding claims, in which the thermoplastic polymer composing the thermoplastic matrix of the polymer composition is chosen from polylactones, polyurethanes, polycarbonates, polysulphones, polyethers, polyketones, polyamides, polyesters, poly(arylene oxide)s, poly(arylene sulphide)s, polyetherimides, vinyl polymers and their copolymers, ethylenevinyl acetate copolymers, acrylic polymers and copolymers, polyacrylates and their copolymers, polyolefins, ionomers, poly(epichlorohydrin)s, poly(urethane)s, polysulphones, furan resins, cellulose ester plastics, silicones and blends of at least two of the above polymers.

10. Use according to any one of the preceding claims, in which the thermoplastic polymer composing the thermoplastic matrix of the polymer composition is based on polyamide.

11. Use according to any one of the preceding claims, in which the thermoplastic polymer composing the thermoplastic matrix of the polymer composition is a polyamide chosen from polyamide 6, polyamide 6,6, polyamide 11, polyamide 12, polyamide 4, polyamides 4,6, 6,10, 6,12, 6,36 and 12,12, and semiaromatic polyamides obtained from terephthalic and/or isophthalic acid.

12. Thermoplastic polymer composition comprising a proportion by weight with respect to the total weight of the polymer composition of greater than or equal to 2% and of less than 4% of a combination of inorganic fillers, the combination comprising at least two inorganic fillers chosen from zinc sulphide, titanium dioxide and silica, with the exception of the polymer compositions with a polyester matrix comprising a binary combination of titanium dioxide and of zinc sulphide.

13. Composition according to Claim 12, **characterized in that** it comprises a combination of inorganic fillers chosen from ZnS/TiO₂, ZnS/SiO₂, ZnS/SiO₂/TiO₂ and TiO₂/SiO₂, with the exception of the polymer compositions with a polyester matrix comprising a binary combination of titanium dioxide and of zinc sulphide.

14. Article obtained from one or more compositions according to Claim 12 or Claim 13.

15. Article according to Claim 14, in the form of yarns, fibres or filaments.

16. Flocked surface of high mattness comprising one or more articles as defined in either one of Claims 14 and 15.

## Patentansprüche

1. Verwendung einer Kombination von mineralischen Füllstoffen als Additiv in thermoplastischen Polymerzusammensetzungen zur Verbesserung des Mattheitsgrads davon gegenüber einer identischen thermoplastischen Polymerzusammensetzung, die als einzigen mineralischen Füllstoff Titandioxid in gleicher Menge enthält, wobei die Kombination mindestens zwei unter Zinksulfid, Titandioxid, Bariumsulfat, Siliciumdioxid, Aluminiumoxid, Calciumcarbonat, Calciumsulfat und mattierend wirkenden Tonen ausgewählte mineralische Füllstoffe enthält.

2. Verwendung nach Anspruch 1, **dadurch gekennzeichnet, daß die** Kombination mindestens zwei unter Zinksulfid, Titandioxid, Bariumsulfat und Siliciumdioxid ausgewählte mineralische Füllstoffe enthält.

3. Verwendung nach einem der vorhergehenden Ansprüche, **dadurch gekennzeichnet, daß** die Kombination zwei mineralische Füllstoffe enthält.

4. Verwendung nach einem der vorhergehenden Ansprüche, **dadurch gekennzeichnet, daß** die Kombination von mineralischen Füllstoffen unter den Kombinationen, die Zinksulfid und Titandioxid, Zinksulfid und Bariumsulfat oder Zinksulfid und Siliciumdioxid enthalten, und denjenigen, die Titandioxid und Siliciumdioxid enthalten, ausgewählt ist.

5. Verwendung nach einem der vorhergehenden Ansprüche, bei der die Kombination von mineralischen Füllstoffen Titandioxid und Zinksulfid enthält.

6. Verwendung nach einem der vorhergehenden Ansprüche, bei der sich der Gewichtsanteil der Kombination von mineralischen Füllstoffen, bezogen auf das Gesamtgewicht der Polymerzusammensetzung, auf mehr als 1,5 Gew.-%, vorzugsweise größer gleich 2 Gew.-% und weiter bevorzugt größer gleich 2,5 Gew.-% beläuft.

7. Verwendung nach einem der vorhergehenden Ansprüche, bei der sich der Gewichtsanteil der Kombination von mineralischen Füllstoffen, bezogen auf das Gesamtgewicht der Polymerzusammensetzung, auf weniger als 10 Gew.-%, vorzugsweise weniger als 7 Gew.-% und vorteilhafterweise weniger als 4 Gew.-% beläuft.

8. Verwendung nach einem der vorhergehenden Ansprüche, bei der die mineralischen Füllstoffe in binären Kombinationen in Gewichtsanteilen von 1:99 bis 99:1, vorzugsweise 20:80 bis 80:20, insbesondere 40:60 bis 60:40 und spezifischer in Gewichtsanteilen von etwa 50:50 vorliegen.

9. Verwendung nach einem der vorhergehenden Ansprüche, bei der das thermoplastische Polymer, das die thermoplastische Matrix der Polymerzusammensetzung bildet, unter Polylactonen, Polyurethanen, Polycarbonaten, Polysulfonen, Polyethern, Polyketonen, Polyamiden, Polyestern, Poly-(arylenoxiden), Poly(arylensulfiden), Polyetherimiden, Vinylpolymeren und -copolymeren, EthylenVinylacetat-Copolymeren, Acrylpolymeren und -copolymeren, Polyacrylaten und deren Copolymeren, Polyolefinen, Ionomeren, Poly(epichlorhydrinen), Poly(urethan)en, Polysulfonen, Furanharzen, Celluloseesterkunststoffen, Silikonen und Mischungen von mindestens zwei der obigen Polymere ausgewählt ist.

10. Verwendung nach einem der vorhergehenden Ansprüche, bei der das thermoplastische Polymer, das die thermoplastische Matrix der Polymerzusammensetzung bildet, auf Polyamid basiert.

11. Verwendung nach einem der vorhergehenden Ansprüche, bei der das thermoplastische Polymer, das die thermoplastische Matrix der Polymerzusammensetzung bildet, ein unter Polyamid 6, Polyamid 6,6, Polyamid 11, Polyamid 12, Polyamid 4, Polyamid 4,6, Polyamid 6,10, Polyamid 6,12, Polyamid 6,36, Polyamid 12,12 und aus Terephthalsäure und/oder Isophthalsäure erhaltenen teilaromatischen Polyamiden ausgewähltes Polyamid ist.

12. Thermoplastische Polymerzusammensetzung, enthaltend einen Gewichtsanteil, bezogen auf das Gesamtgewicht der Polymerzusammensetzung, größer gleich 2% und kleiner 4% einer Kombination von mineralischen Füllstoffen, wobei die Kombination mindestens zwei unter Zinksulfid, Titandioxid und Siliciumdioxid ausgewählte mineralische Füllstoffe enthält, mit Ausnahme von Polymerzusammensetzungen mit Polyestermatrix, die eine binäre Kombination von Titandioxid und Zinksulfid enthalten.

13. Zusammensetzung nach Anspruch 12, **dadurch gekennzeichnet, daß** sie eine unter ZnS/TiO₂, ZnS/SiO₂, ZnS/SiO₂/TiO₂ und TiO₂/SiO₂ ausgewählte Kombination von mineralischen Füllstoffen enthält, mit Ausnahme von Polymerzusammensetzungen mit Polyestermatrix, die eine binäre Kombination von Titandioxid und Zinksulfid enthalten.

14. Gegenstand, erhalten aus einer oder mehreren Zusammensetzungen gemäß Anspruch 12 oder Anspruch 13.

15. Gegenstand nach Anspruch 14 in Form von Fäden, Fasern oder Filamenten.

16. Beflockte Oberfläche mit hoher Mattheit, umfassend einen oder mehrere Gegenstände gemäß einem der Ansprüche 14 oder 15.
